# EUROPEAN PATENT APPLICATION

(11) **EP 4 628 495 A1**
(43) Date of publication of application: **08.10.2025**
(21) Application number: 24833401.3
(22) Date of filing: 07.03.2024
(51) Int. Cl.: C07F 9/50, C07F 9/53

(54) **METHOD FOR PREPARING PHOSPHINE-BASED COMPOUND BASED ON PYROPHOSPHOROUS ACID**

(30) Priority: 05.01.2024 CN 202410018022
(71) Applicant: Zhejiang Yangfan New Materials Co., Ltd, Shaoxing, Zhejiang 312000 (CN)
(72) Inventor: HAN, Libiao, Shaoxing, Zhejiang 312000 (CN); WANG, Xin, Shaoxing, Zhejiang 312000 (CN); ZHANG, Jianqiu, Shaoxing, Zhejiang 312000 (CN)
(74) Representative: Chung, Hoi Kan
(86) International application number: PCT/CN2024/080439
(87) International publication number: WO 2025/145496

(57) **Abstract**

A method for preparing organophosphorus compounds using pyrophosphorous acid is provided. A phosphine oxide compound or a phosphine sulfide compound is reacts with reducing agent pyrophosphorous acid (H₄P₂O₅) with or without impurities under stirring in the presence of a catalyst to produce a reaction product, where the catalyst is elementary halogen (X₂) or halide (M_{X}X_{Y}). After the reaction is completed, the reaction product is subjected to water washing, extraction and purification to obtain the target phosphine compound.

## Description

### CROSS-REFERENCE TO RELATED APPLICATIONS

This application is a continuation of International Patent Application No. PCT/CN2024/080439, filed on March 7, 2024, which claims the benefit of priority from Chinese Patent Application No. 202410018022. 4, filed on January 5, 2024. The content of the aforementioned application, including any intervening amendments thereto, is incorporated herein by reference in its entirety.

### TECHNICAL FIELD

This application relates to organic synthesis, and more particularly to a method for preparing organophosphorus compounds using pyrophosphorous acid.

### BACKGROUND

Triphenylphosphine is an important fine chemical, which has been widely used in the organic synthesis and industrial production. For example, triphenylphosphine can participate in the Wittig reaction, Staudinger reaction, Mitsunobu reaction, and Appel reaction, and it also serves as a ligand in various transition metal-catalyzed homogeneous reactions. The industrial production of vitamins through the Wittig reaction involving triphenylphosphine is accompanied by the generation of a byproduct triphenylphosphine oxide (with an annual production reaching ten thousand tons). Due to its stable chemical property and low utilization value, triphenylphosphine oxide is often treated as solid waste or by incineration, leading to a waste of phosphorus resources and environmental pollution. As environmental concerns and the global shortage of phosphorus resources become increasingly prominent, recycling triphenylphosphine oxide has become essential.

Currently, triphenylphosphine oxide is often converted into triphenylphosphine by reduction for recycling through the following routes.
(1) A reduction method developed by BASF using phosgene combined with Fe, Al, or Si. This method involves highly-toxic phosgene and will generate a large amount of solid chloride waste.
(2) A reduction method based on various silanes as reducing agent (e.g., trichlorosilane). This process generates large quantities of hydrochloric acid and solid waste (e.g., silicon oxide).
(3) Reduction approaches based on boranes, aluminum hydride reagents, and oxalyl chloride.
(4) A recently-developed reduction method involving an iodine/diphenyl phosphite/trimethyl phosphite system (Li P., Wischert R., Métivier P. Mild Reduction of Phosphine Oxides with Phosphites to Access Phosphines. Angew. Chem. Int. Ed. 2017, 56, 15989-15992), as well as a method for reducing phosphine oxides using an iodine/phosphorous acid system (Han et al., J. Org. Chem. 2023, 88, 3909-3915). Both methods have achieved high reduction efficiency, but they require the expensive elementary iodine, and it is difficult to recover the iodine from such the reaction system, which result in high costs and serious iodine waste pollution, making them unsuitable for the large-scale industrial production.

In summary, both the traditional methods and iodine-mediated reduction methods represented below struggle with high cost of reducing agents, potential safety risks, or serious pollution.

### Traditional methods

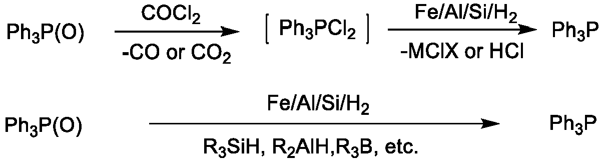

### Reduction methods mediated by Iodine

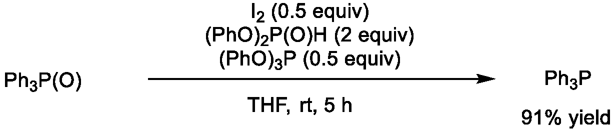

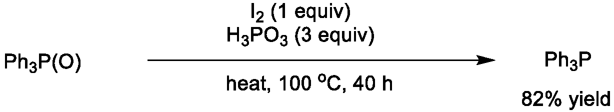

### SUMMARY

An object of the disclosure is to provide a method for preparing organophosphorus compounds using pyrophosphorous acid to overcome the defects in the prior art. The method provided herein employs inexpensive and readily-available pyrophosphorous acid (H₄P₂O₅) as reducing agent and an extremely low amount of iodine (I₂) as a catalyst, which are mixed with a phosphine oxide (sulfide) compound to produce the desired phosphine compound. Based on this, this method is cost-effective, efficient, easy to operate, and safe, and thus is particularly suitable for the large-scale industrial production.

Technical solutions of the present disclosure are described as follows.

The method for preparing organophosphorus compounds using pyrophosphorous acid, comprising:
adding pyrophosphorous acid (H₄P₂O₅) with or without impurities as a reducing agent to a phosphine oxide compound or a phosphine sulfide compound to obtain a mixture; mixing the mixture with a catalyst followed by a reduction reaction under stirring to produce a reaction product, wherein the catalyst is an elementary halogen X₂ or a halide M_{X}X_{Y}; and subjecting the reaction product to water washing, extraction and purification to obtain the phosphine compound Y; and
a reaction scheme is shown as 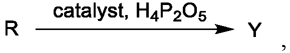 and the pyrophosphorous acid (H₄P₂O₅) is represented by: 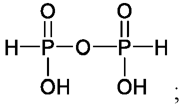 wherein a molar ratio of pyrophosphorous acid to a phosphine oxide group in phosphine oxide compound or a phosphine sulfide group in the phosphine sulfide compound is 1-20:1; and a molar ratio of the catalyst to the phosphine oxide group in the phosphine oxide compound or the phosphine sulfide group in the phosphine sulfide compound is 0.001-0.1:1.

In some embodiments, the elementary halogen X₂ is selected from the group consisting of Cl₂, Br₂ and I₂; and the halide M_{X}X_{Y} is an organic or inorganic halide free of fluorine.

In some embodiments, the halide M_{X}X_{Y} is selected from the group consisting of LiX, NaX, KX, MgX₂, AlX₃, FeX₂, FeX₃, NH₄X, R₃NH and R₃SiX, where R is an alkyl or an aryl group.

In some embodiments, the elementary halogen X₂ is I₂, and the halide M_{X}X_{Y} is an iodide compound.

In some embodiments, the phosphine oxide compound contains an aromatic group, and the phosphine sulfide compound contains an aromatic group.

In some embodiments, the phosphine oxide compound contains the aromatic group bonded to P, and the phosphine sulfide compound contains the aromatic group bonded to P.

In some embodiments, the phosphine oxide compound and the phosphine sulfide compound are each represented by 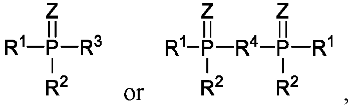 the phosphine compound Y is correspondingly represented by 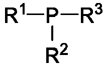 or 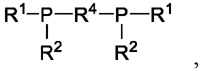 and a reaction scheme is correspondingly shown as 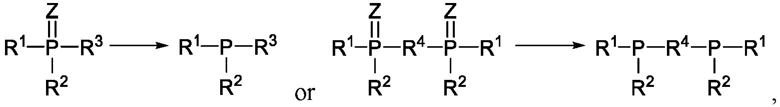
wherein Z is O or S;
R¹ and R² are each an aryl group; and R³ is selected from the group consisting of cycloalkyl, alkyl, thiophenyl, ferrocenyl, and aryl; and
R⁴ is selected from the group consisting of aryl, ferrocenyl and alkyl.

In some embodiments, R¹ and R² are each independently an unsubstituted phenyl, or a phenyl substituted with halogen, alkoxy, trifluoromethyl, cyano, alkyl, or a combination thereof;
R³ is an unsubstituted phenyl, thiophenyl, ferrocenyl, cycloalkyl, an unsubstituted alkyl, a phenyl substituted with halogen, alkoxy, trifluoromethyl, cyano, alkyl, a high-molecular group or a combination thereof, or an alkyl substituted with phenyl or a high-molecular group; and
R⁴ is selected from the group consisting of phenyl, ferrocenyl and alkyl.

In some embodiments, the high-molecular group has a molecular weight of 3000-5000, e.g., polyacrylonitrile groups and polyethylene glycol group.

In some embodiments, for the pyrophosphorous acid with impurities, the impurities comprise carboxylic acid, acyl chloride, phosphorous acid, water, hydrogen chloride, or a combination thereof.

In some embodiments, the impurities account for 20% or less of a total weight of the pyrophosphorous acid.

In some embodiments, the reduction reaction is carried out under a nitrogen atmosphere or an air atmosphere.

In some embodiments, the reduction reaction is carried out at 40-120°C.

In some embodiments, the reduction reaction is carried out at 80-100°C.

In some embodiments, the method provided herein further comprising:
adding an organic solvent;
wherein the organic solvent is selected from the group consisting of an aromatic solvent, alkane, haloalkane, and a combination thereof.

In some embodiments, the organic solvent is selected from the group consisting of benzene, toluene, xylene, hexane, pentane, dichloroethane, tetrachloroethylene, trichloromethane, and a combination thereof.

In some embodiments, the organic solvent is selected from the group consisting of dichloroethane, tetrachloroethylene, trichloromethane, and a combination thereof.

In some embodiments, the molar ratio of the catalyst to the phosphine oxide group in the phosphine oxide compound or the phosphine sulfide group in the phosphine sulfide compound is 0.0025-0.025:1.

In some embodiments, a final byproduct generated in the reaction is orthophosphoric acid (H₃PO₄), which can be easily removed by water washing and is readily recoverable.

In some embodiments, the pyrophosphorous acid (H₄P₂O₅) is prepared through steps of:
mixing phosphorous acid (H₃PO₃) with phosphorus trichloride (PCl₃) in a molar ratio of 5:1 under a nitrogen atmosphere at 0°C; restoring the reaction mixture to room temperature until the reaction is completed; and removing low-boiling point substances from the reaction mixture under reduced pressure to obtain the pyrophosphorous acid (H₄P₂O₅).

Alternatively, the pyrophosphorous acid (H₄P₂O₅) is prepared through the following steps: mixing a carboxylic acid with phosphorus trichloride (PCl₃) in a molar ratio of 3:1 under a nitrogen atmosphere at 0°C; restoring the reaction mixture to room temperature until the reaction is completed; and removing low-boiling point substances from the reaction mixture under reduced pressure to obtain the pyrophosphorous acid (H₄P₂O₅).

Pyrophosphorous acid (H₄P₂O₅) can also be synthesized by other well-known methods, for example, it can be prepared through the intermolecular dehydration of phosphorous acid (H₃PO₃).

Compared to the prior art, the present disclosure has the following beneficial effects.
(1) The method provided herein employs inexpensive and readily-available pyrophosphorous acid (H₄P₂O₅) as reducing agent and an extremely low catalytic amount of elementary halogen (X₂) or halide (M_{X}X_{Y}) as a catalyst, which are mixed with a phosphine oxide (sulfide) compound to produce the desired phosphine compound. Based on this, this method reduces the use of expensive iodine, lowering both costs and the environmental impact of iodine waste treatment.
(2) Pyrophosphorous acid (H₄P₂O₅) employed herein can be easily prepared by mixing phosphorous acid with phosphorus trichloride (PCl₃) or isobutyryl chloride with phosphorus trichloride (PCl₃). This preparation method is simple, efficient, practical and safe. The pyrophosphorous acid (H₄P₂O₅) is tolerant to impurities, allowing the use of waste phosphoric acid containing pyrophosphorous acid as an industrial byproduct in the reductive catalytic reaction, thereby enabling the production of triphenylphosphine with high yield in industrial applications.
(3) The final byproduct generated in the reaction of the present disclosure is orthophosphoric acid (H₃PO₄), which can be easily removed by water washing and is readily recoverable.
(4) In the present disclosure, only 0.0055 mol% of elementary halogen or halide is required as the catalyst to carry out the reduction reaction under mild conditions. Furthermore, the preparation method disclosed herein can be performed under either an air atmosphere or a nitrogen atmosphere, with low equipment specifications and ease of operation.
(5) In the present disclosure, the phosphine oxide compound, the phosphine sulfide compound, the reducing agent and the catalyst can be reacted either in the presence or absence of an organic solvent. There is no need for harsh reaction conditions, rendering the preparation method provided herein cost-effective, simple, practical, safe and environmentally friendly.

### DETAILED DESCRIPTION OF EMBODIMENTS

The technical solutions of the present disclosure will be described clearly and completely below in conjunction with the embodiments. It is obvious that the described embodiments are merely some embodiments of the present disclosure, instead of all embodiments. Based on the embodiments in the present disclosure, all other embodiments obtained by those of ordinary skill in the art without making creative effort shall fall within the scope of the present disclosure.

### EXPERIMENTAL EXAMPLE 1

### Synthesis of pyrophosphorous acid (H₄P₂O₅)

Phosphorous acid (410 g, 5 mol, 5 equiv.) was added to a three-neck flask under a nitrogen atmosphere, to which phosphorus trichloride (PCl₃, 137.3 g, 1 mmol, 1 equiv.) was added dropwise at 0°C. The reaction mixture was restored to room temperature and reacted overnight. After the reaction was completed, the reaction mixture was subjected to vacuum distillation to remove low-boiling point substances, so as to produce a yellow solid pyrophosphorous acid (H₄P₂O₅, 350.3 g, 2.4 mol, 96% yield, 99% purity as determined by ³¹P NMR and ¹H NMR).

### EXAMPLE 1

### Preparation of triphenylphosphine (Ph₃P)

Triphenylphosphine oxide (Ph₃P(O), 1.0 g, 3.59 mmol, 1 equiv.), iodine (I₂, 22.8 mg, 0.09 mmol, 0.025 equiv.), pyrophosphorous acid (H₄P₂O₅, 5.26 g, 35.9 mmol, 10 equiv.) and toluene (5.0 mL) were added to a 50 mL Schlenk flask under a nitrogen atmosphere. The reaction mixture was heated to 100°C and reacted at 100°C for 5 h. After the reaction was completed, the reaction mixture was added with water (5 mL), and subjected to extraction with ethyl acetate. An organic phase was collected, concentrated and purified by silica gel column chromatography under a nitrogen atmosphere to produce triphenylphosphine (Ph₃P, 867.7 mg, 3.3 mmol, 99.5% purity analyzed by gas chromatography (GC) and 92% yield).

### EXAMPLES 2-24

Based on **Example 1**, the solvent (without solvent or with different solvents), catalyst (iodine (I₂) or hydrogen iodide (HI)), the solvent volume (mL), the molar ratio of pyrophosphorous acid (H₄P₂O₅) to triphenylphosphine oxide (Ph₃P(O)), the molar ratio of iodine (I₂) to triphenylphosphine oxide (Ph₃P(O)), the reaction temperature and the reaction time were adjusted to obtain various triphenylphosphine (Ph₃P) samples 2-24.

The reaction conditions of **Examples 1-24** were shown in Table 1.

**Table 1 Reaction conditions and triphenylphosphine (Ph₃P) yields of Examples 1-24**

| Reaction scheme | 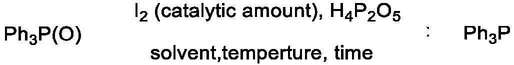 | | | | | | |
|---|---|---|---|---|---|---|---|
| **Exampl e** | Solvent | Solven t volum e (mL) | Molar ratio of H₄P₂O₅ to Ph₃P(O ) | Molar ratio of I₂ to Ph₃P(O ) | Reaction temperatur e (°C) | Reactio n time (h) | Yiel d |
| **1** | Toluene | 5 | 10 | 0.025 | 100 | 5 | 92% |
| **2** | Toluene | 5 | 10 | 0.025 | 100 | 3 | 82% |
| **3** | Toluene | 5 | 10 | 0.025 | 100 | 23 | 93% |
| **4** | Toluene | 5 | 10 | 0.025 | 80 | 5 | 82% |
| **5** | Toluene | 5 | 10 | 0.025 | 120 | 5 | 90% |
| **6** | Toluene | 5 | 8 | 0.025 | 100 | 5 | 75% |
| **7** | Toluene | 5 | 3 | 0.025 | 100 | 5 | 63% |
| **8** | Toluene | 5 | 1.3 | 0.025 | 100 | 5 | 11% |
| **9** | Toluene | 5 | 15 | 0.025 | 100 | 5 | 90% |
| **10** | Toluene | 5 | 10 | 0.05 | 100 | 5 | 64% |
| **11** | Toluene | 5 | 10 | 0.0055 | 100 | 5 | 94% |
| **12** | Toluene | 5 | 7.6 | 0.0055 | 100 | 5 | 89% |
| **13** | Toluene | 5 | 10 | 0.0025 | 100 | 5 | 91% |
| **14** | Toluene | 5 | 10 | 0 | 100 | 5 | 0 |
| **15** | Toluene | 5 | 10 | HI instead of I₂ 0.025 | 100 | 5 | 0 |
| **16** | None | 5 | 10 | 0.025 | 100 | 5 | 91% |
| **17** | Ethanol | 5 | 10 | 0.025 | 100 | 5 | 0 |
| **18** | Tetrahydrofuran (THF) | 5 | 10 | 0.025 | 100 | 5 | 0 |
| **19** | Xylene | 5 | 10 | 0.025 | 100 | 5 | 90% |
| **20** | Mesitylene | 5 | 10 | 0.025 | 100 | 5 | 89% |
| **21** | n-Hexane | 5 | 10 | 0.025 | 100 | 5 | 91% |
| **22** | Dichloroethane | 5 | 10 | 0.025 | 100 | 5 | 85% |
| **23** | Tetrachloroethylen e | 5 | 10 | 0.025 | 100 | 5 | 76% |
| **24** | Trichloromethane | 5 | 10 | 0.025 | 100 | 5 | 69% |

It can be concluded from the comparison between **Example 1** and **Examples 2-3** that under the same conditions, the reaction was essentially complete after 5 h, and extending the reaction time will not significantly increase the yield after 5 h.

It can be concluded from the comparison between **Example 1** and **Examples 4-5** under the same conditions, 100°C was the optimal reaction temperature, and lowering or further increasing the temperature will not increase the yield.

The comparison between **Example 1** and **Examples 6-9** showed that under the same conditions, continuously reducing the amount of pyrophosphorous acid (H₄P₂O₅) led to a decrease in the reaction yield. In the case of 1.3 equivalents of H₄P₂O₅ were used, only 11% of triphenylphosphine (Ph₃P) was reduced. Increasing the amount of pyrophosphorous acid (H₄P₂O₅) from 10 equivalents to 15 equivalents did not further improve the yield; instead, it decreased from 92% to 90%. Therefore, it could be concluded that for the reduction reaction of phosphine oxide (sulfur) compounds in the H₄P₂O₅/I₂ system, the molar ratio of H₄P₂O₅ to phosphine oxide (sulfur) compounds should be between 1-20: 1, with a preferred ratio of 8-15: 1. Considering economic cost factors, the most optimal molar ratio is 8-10:1.

The comparison between **Example 1** and **Examples 10-13** showed that under the same conditions, as demonstrated in **Example 10,** increasing the amount of iodine (I₂) as a catalyst actually decreased the reaction yield. As seen in **Example 11,** when the iodine (I₂) amount was reduced to 0.0055 mol%, the yield increased to 94%, which was higher than the result in **Example 1** where 0.025 mol% iodine was used, indicating that a moderate reduction in iodine amount was more beneficial for the reduction reaction. As shown in **Example 13,** when the iodine (I₂) amount was further reduced to 0.0025 mol%, a high yield of 91% was still maintained. Therefore, it could be concluded that for the reduction reaction of phosphine oxide (sulfur) compounds in the H₄P₂O₅/I₂ system, the molar ratio of iodine (I₂) to phosphine oxide (sulfur) compounds should be between 0.001-0.1:1, with a preferred ratio of 0.0025- 0.025: 1.

The comparison between **Example 1** and **Examples 14-15** showed that under the same reaction conditions, the reaction failed to proceed without the addition of iodine (I₂) as the catalyst, nor did it proceed when hydrogen iodide (HI) was used as a substitute for iodine (I₂).

The comparison between **Example 1** and **Example 16** showed that under the same reaction conditions, the reaction can proceed efficiently even without the addition of a solvent, achieving a yield of 91% for triphenylphosphine (Ph₃P).

The comparison between **Example 1** and **Examples 17-18** showed that under the same reaction conditions, polar solvents, such as ethanol and THF, will hinder the reaction from occurring.

The comparison between **Example 1** and **Examples 19-21** demonstrated that under the same reaction conditions, the reaction can also proceed in a non-polar hydrocarbon solvent such as xylene, mesitylene, and n-hexane.

### EXAMPLE 25

### Preparation of triphenylphosphine (Ph₃P) under an air atmosphere

Triphenylphosphine oxide (Ph₃P(O), 1.0 g, 3.59 mmol, 1 equiv.), iodine (I₂) (22.8 mg, 0.09 mmol, 0.025 equiv.), pyrophosphorous acid (H₄P₂O₅, 5.26 g, 35.9 mmol, 10 equiv.) and toluene (5.0 mL) were added to a 50 mL Schlenk flask under an air atmosphere. The reaction mixture was heated to 100°C and reacted at 100°C for 5 h. After the reaction was completed, the reaction mixture was added with water (5 mL), and subjected to extraction with ethyl acetate. The organic phase was collected, concentrated and purified by silica gel column chromatography under a nitrogen atmosphere to produce triphenylphosphine (Ph₃P, 783.7 mg, 2.99 mmol, 99.5% GC content and 83% yield).

The comparison between **Example 1** and **Example 25** showed that triphenylphosphine oxide (Ph₃P(O)) can participate in the reduction reaction of the H₄P₂O₅/I₂ system under both air and nitrogen atmospheres, without significant loss in yield. However, it was observed that triphenylphosphine oxide (Ph₃P(O)) had a higher yield under an oxygen-free condition than under an air atmosphere. Therefore, it could be concluded that the reduction reaction of phosphine oxide (sulfur) compounds in the H₄P₂O₅/I₂ system could proceed under both air and nitrogen atmosphere (under oxygen or oxygen-free conditions).

### EXAMPLE 26

### Preparation of triphenylphosphine (Ph₃P) based on a mixture of pyrophosphorous acid (H₄P₂O₅) containing impurities

Triphenylphosphine oxide (Ph₃P(O), 1.0 g, 3.59 mmol, 1 equiv.), iodine (I₂) (22.8 mg, 0.09 mmol, 0.025 equiv.), a mixture of pyrophosphorous acid (H₄P₂O₅, 5.3 g, containing 80 wt.% H₄P₂O₅, 15 wt.% H₃PO₃, 1 wt.% i-BuCO₂H, 3 wt.% i-BuCOCl, 0.5 wt.% HCl and 0.5 wt.% unidentified substances) and toluene (5.0 mL) were added to a 50 mL Schlenk flask under a nitrogen atmosphere. The reaction mixture was heated to 100°C and reacted at 100°C for 5 h. After the reaction was completed, the reaction mixture was added with water (5 mL), and subjected to extraction with ethyl acetate. The organic phase was collected, concentrated and purified by silica gel column chromatography under a nitrogen atmosphere to produce triphenylphosphine (Ph₃P, 848.3 mg, 3.2 mmol, 99.5% GC content and 90% yield).

The comparison between **Example 1** and **Example 26** showed that using the mixture of pyrophosphorous acid (H₄P₂O₅) containing impurities to prepare triphenylphosphine (Ph₃P) resulted in a yield of 90%. This indicated that the waste phosphoric acid byproduct (containing 80 wt.% pyrophosphorous acid and 8 equiv. of effective pyrophosphorous acid) obtained from the industrial preparation of isobutyryl chloride using isobutyric acid and PCl₃ can be used in this reduction catalytic reaction to achieve a high yield of the triphenylphosphine product.

### EXAMPLES 27-34

### Reduction reactions of different phosphine oxide and phosphine sulfide compounds in the H₄P₂O₅/I₂ system

Based on the optimal **Example 11** in **Examples 1-24,** 1 g of different phosphine oxide and phosphine sulfide compounds were separately selected and reacted with 0.0055 mol% iodine (I₂), 10 equivalents of pyrophosphorous acid (H₄P₂O₅) and 5 mL of toluene at 100°C for 5 h to obtain the corresponding phosphine compounds.

The reactions of **Example 11** and **Examples 27-34** were shown in Table 2.

**Table 2: Reactions of different phosphine oxide (sulfide) compounds in the H₄P₂O₅/I₂ system**

| Reaction scheme | 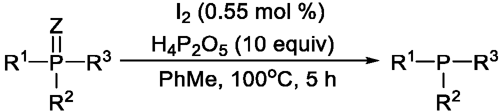 | | | | |
|---|---|---|---|---|---|
| **Exampl e** | Phosphine oxide (sulfide) compound | Reaction temperatur e | Reactio n time | Product | Yield |
| **11** | 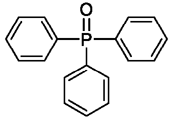 | 100°C | 5 h | 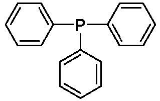 | 94% |
| **27** | 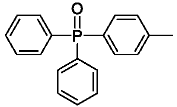 | 100°C | 5 h | 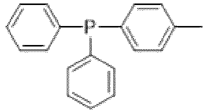 | 85% |
| **28** | 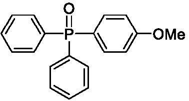 | 100°C | 5 h | 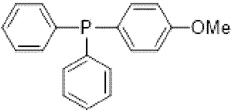 | 99% |
| **29** | 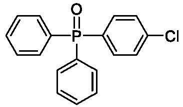 | 100°C | 5 h | 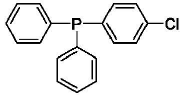 | 96% |
| **30** | 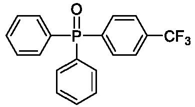 | 100°C | 5 h | 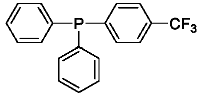 | 25% |
| **31** | 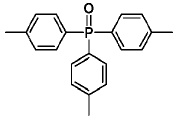 | 100°C | 5 h | 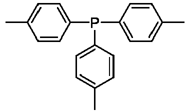 | 96% |
| **32** | 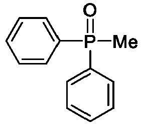 | 100°C | 5 h | 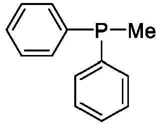 | 100 % |
| **33** | 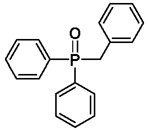 | 100°C | 5 h | 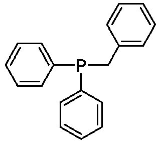 | 90% |
| **34** | 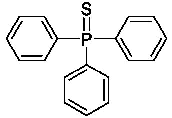 | 100°C | 20 h | 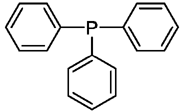 | 42% |

Through **Example 11, Examples 27-29** and **Examples 31-33**, it could be seen that the yields of the different phosphine compound products were all above 85%.

It can be concluded from the comparison between **Example 11** and **Examples 27-34** that the phosphine oxide compound contained an aromatic group, and the phosphine sulfide compound contained an aromatic group. Furthermore, the phosphine oxide compound contained the aromatic group bonded to P, and the phosphine sulfide compound contained the aromatic group bonded to P.

R¹ and R² were each an aryl group. R³ was selected from the group consisting of cycloalkyl, alkyl, thiophenyl, ferrocenyl, and aryl. R⁴ was selected from the group consisting of aryl, ferrocenyl and alkyl. R¹, R² and R³ can be the same or independently different.

Furthermore, R¹ and R² were each independently an unsubstituted phenyl, or a phenyl substituted with halogen, alkoxy, trifluoromethyl, cyano, alkyl, or a combination thereof. R³ was an unsubstituted phenyl, thiophenyl, ferrocenyl, cycloalkyl, an unsubstituted alkyl, a phenyl substituted with halogen, alkoxy, trifluoromethyl, cyano, alkyl or a combination thereof, or an alkyl substituted with phenyl. R⁴ was selected from the group consisting of phenyl, ferrocenyl and alkyl.

Based on **Examples 1** and **27-34**, it can be inferred that Z can be O or S. Therefore, it could be further speculated that both phosphine oxide and phosphine sulfide compounds can produce the phosphine compounds by reduction in the H₄P₂O₅/I₂ system.

### EXAMPLES 35-38

### Reduction reactions of various phosphine oxide compounds containing multiple phosphine oxide bonds in the H₄P₂O₅/I₂ system

Based on the optimal **Example 11**, 1 g of various phosphine oxide compounds containing multiple phosphine oxide bonds and phosphine sulfide compounds were separately selected and reacted with 0.0055 mol% iodine (I₂), 10 equivalents of pyrophosphorous acid (H₄P₂O₅) and 5 mL of toluene at 100°C for 5 h to obtain the corresponding phosphine compounds.

The reactions of **Examples 35-38** were shown in Table 3.

**Table 3: Reactions of compounds containing multiple phosphine oxide bonds in the H₄P₂O₅/I₂ system**

| Reactio n scheme | 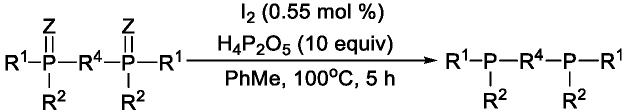 | | | | |
|---|---|---|---|---|---|
| **Examp le** | Phosphine oxide (sulfide) compounds | Reaction temperatu re | Reac tion time | Product | Yield (semi-reduced/full-reduced product ratio) |
| **35** | 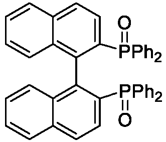 | 100°C | 5 h | 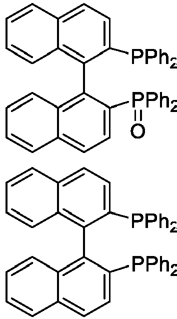 | 99% (72/25) |
| **36** | 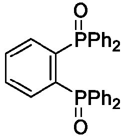 | 100°C | 5 h | 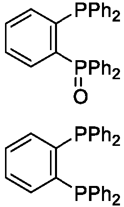 | 98% (85/13) |
| **37** | 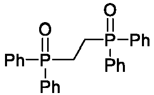 | 100°C | 5 h | 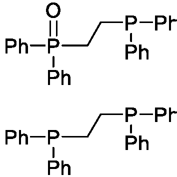 | 100% (47/53) |
| **38** | 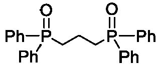 | 100°C | 5 h | 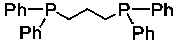 | 97% (Full reduction) |

From **Examples 35-38**, it can be observed that compounds containing two phosphine oxide bonds reacted in the H₄P₂O₅/I₂ system with yields above 97%. Therefore, it could be concluded that phosphine oxide compounds with multiple phosphine oxide groups can react in the H₄P₂O₅/I₂ system and achieve good yields.

### EXAMPLES 39-41

Based on **Example 1**, 0.18 mmol of different halides (M_{X}X_{Y}) were selected as catalysts and reacted under the same conditions as in **Example 1** to produce various triphenylphosphine (Ph₃P) samples 39-41.

The reaction conditions for **Examples 39-41** were shown in Table 4.

**Table 4: Reaction conditions and triphenylphosphine (Ph₃P) yields of Examples 39-41**

| **Example** | Solvent | Molar ratio of H₄P₂O₅ to Ph₃P(O) | Catalyst | Amount of catalyst | Reaction temperature (°C) | Reaction time (h) | Yield |
|---|---|---|---|---|---|---|---|
| **39** | 5 mL of toluene | 10 | Me₃SiI | 0.18mmol | 100 | 5 | 98% |
| **40** | 5 mL of toluene | 10 | NaI | 0.18mmol | 100 | 5 | 95% |
| **41** | 5 mL of toluene | 10 | NaBr | 0.18mmol | 100 | 5 | 3% |

It could be seen from **Examples 39-41** that halide (M_{X}X_{Y}) as the catalyst enabled the preparation of phosphine compounds.

From **Example 41,** it was observed that non-iodide catalysts can still facilitate the preparation of phosphine compounds, although the yield was only 3%. Therefore, iodide compounds were preferred catalysts for the preparation of phosphine compounds.

### COMPARATIVE EXAMPLE 1

### Preparation of triphenylphosphine (Ph₃P) based on phosphorous acid (H₃PO₃)

Triphenylphosphine oxide (Ph₃P(O), 1.0 g, 3.59 mmol, 1 equiv.), iodine (I₂, 22.8 mg, 0.09 mmol, 0.025 equiv.), phosphorous acid (H₃PO₃, 5.9 g, 71.87 mmol, 10 equiv.) and toluene (5.0 mL) were added to a 50 mL Schlenk flask under a nitrogen atmosphere. The reaction mixture was heated to 100°C and reacted at 100°C for 5 h. No reaction was observed, and the yield was 0%.

### COMPARATIVE EXAMPLE 2

### Preparation of triphenylphosphine (Ph₃P) based on phosphorous acid (H₃PO₃)

Triphenylphosphine oxide (Ph₃P(O), 1.0 g, 3.59 mmol, 1 equiv.), iodine (I₂, 22.8 mg, 0.09 mmol, 0.025 equiv.), phosphorous acid (H₃PO₃, 5.9 g, 71.87 mmol, 20 equiv.) and toluene (5.0 mL) were added to a 50 mL Schlenk flask under a nitrogen atmosphere. The reaction mixture was heated to 120°C and reacted at 120°C for 10 h. No reaction was observed, and the yield was 0%.

### COMPARATIVE EXAMPLE 3

### Preparation of triphenylphosphine (Ph₃P) based on hypophosphorous acid (H₃PO₂)

Triphenylphosphine oxide (Ph₃P(O), 1.0 g, 3.59 mmol, 1 equiv.), iodine (I₂, 22.8 mg, 0.09 mmol, 0.025 equiv.), hypophosphorous acid (H₃PO₂, 4.74 g, 71.87 mmol, 20 equiv.) and toluene (5.0 mL) were added to a 50 mL Schlenk flask under a nitrogen atmosphere. The reaction mixture was heated to 100°C and reacted at 100°C for 5 h. No reaction was observed, and the yield was 0%.

### COMPARATIVE EXAMPLE 4

### Preparation of triphenylphosphine (Ph₃P) based on metaphosphoric acid (HPO₃)

Triphenylphosphine oxide (Ph₃P(O), 1.0 g, 3.59 mmol, 1 equiv.), iodine (I₂, 22.8 mg, 0.09 mmol, 0.025 equiv.), metaphosphoric acid (HPO₃, 3.59 g, 71.87 mmol, 20 equiv.) and toluene (5.0 mL) were added to a 50 mL Schlenk flask under a nitrogen atmosphere. The reaction mixture was heated to 100°C and reacted at 100°C for 5 h. No reaction was observed, and the yield was 0%.

The comparison between **Examples 1-38** and **Comparative Examples 1-4** showed that reducing agents such as phosphorous acid, hypophosphorous acid or metaphosphoric acid failed to catalyze the reaction of triphenylphosphine oxide (Ph₃P(O)).

### COMPARATIVE EXAMPLE 5

### Preparation of triphenylphosphine (Ph₃P) in the absence of a catalyst

Triphenylphosphine oxide (Ph₃P(O), 1.0 g, 3.59 mmol, 1 equiv.), pyrophosphorous acid (H₄P₂O₅, 5.26 g, 35.9 mmol, 10 equiv.), and toluene (5.0 mL) were added to a 50 mL Schlenk flask under a nitrogen atmosphere. The reaction mixture was heated to 100°C and reacted at 100°C for 5 h. After the reaction was completed, the reaction mixture was added with water (5 mL), and subjected to extraction with ethyl acetate. The organic phase was collected, concentrated and purified by silica gel column chromatography under a nitrogen atmosphere to obtain triphenylphosphine (Ph₃P). The yield of the triphenylphosphine (Ph₃P) was less than 1%.

The comparison between **Example 1** and **Comparative Example 5** showed that without the addition of the elementary halogen (X₂) or halide (M_{X}X_{Y}), triphenylphosphine (Ph₃P) could not be effectively obtained.

### COMPARATIVE EXAMPLE 6

### Preparation of triphenylphosphine (Ph₃P) using sodium fluoride as a catalyst

Triphenylphosphine oxide (Ph₃P(O), 1.0 g, 3.59 mmol, 1 equiv.), sodium fluoride (NaF, 0.19 mmol, 7.6 mg), pyrophosphorous acid (H₄P₂O₅, 5.26 g, 35.9 mmol, 10 equiv.) and toluene (5.0 mL) were added to a 50 mL Schlenk flask under a nitrogen atmosphere. The reaction mixture was heated to 100°C and reacted at 100°C for 5 h. No reaction was observed, and the yield was 0%.

It could be seen from **Comparative Example 6** that fluorine or fluorides failed to catalyze the reaction of triphenylphosphine oxide (Ph₃P(O)).

## Claims

1. A method for preparing organophosphorus compounds using pyrophosphorous aci, comprising:
adding pyrophosphorous acid (H₄P₂O₅) with or without impurities as a reducing agent to a phosphine oxide compound or a phosphine sulfide compound to obtain a mixture;
mixing the mixture with a catalyst followed by a reduction reaction under stirring to produce a reaction product, wherein the catalyst is an elementary halogen X₂ or a halide M_{X}X_{Y}; and
subjecting the reaction product to water washing, extraction and purification to obtain the phosphine compound Y;
wherein a molar ratio of pyrophosphorous acid to a phosphine oxide group in phosphine oxide compound or a phosphine sulfide group in the phosphine sulfide compound is 1-20:1; and a molar ratio of the catalyst to the phosphine oxide group in the phosphine oxide compound or the phosphine sulfide group in the phosphine sulfide compound is 0.001-0.1:1.

2. The method of claim 1, wherein the elementary halogen X₂ is selected from the group consisting of Cl₂, Br₂ and I₂; and the halide M_{X}X_{Y} is an organic or inorganic halide free of fluorine.

3. The method of claim 1, wherein the elementary halogen X₂ is I₂, and the halide M_{X}X_{Y} is an iodide compound.

4. The method of claim 1, wherein the phosphine oxide compound contains an aromatic group, and the phosphine sulfide compound contains an aromatic group.

5. The method of claim 1, wherein the phosphine oxide compound and the phosphine sulfide compound are each represented by 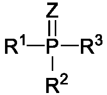 or 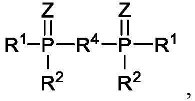 the phosphine compound Y is correspondingly represented by 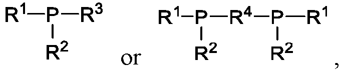 and a reaction scheme is correspondingly shown as 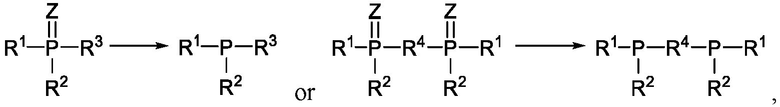
wherein Z is O or S;
R¹ and R² are each an aryl group; and R³ is selected from the group consisting of cycloalkyl, alkyl, thiophenyl, ferrocenyl, and aryl; and
R⁴ is selected from the group consisting of aryl, ferrocenyl and alkyl.

6. The method of claim 5, wherein R¹ and R² are each independently an unsubstituted phenyl, or a phenyl substituted with halogen, alkoxy, trifluoromethyl, cyano, alkyl, or a combination thereof;
R³ is an unsubstituted phenyl, thiophenyl, ferrocenyl, cycloalkyl, an unsubstituted alkyl, a phenyl substituted with halogen, alkoxy, trifluoromethyl, cyano, alkyl, a high-molecular group or a combination thereof, or an alkyl substituted with phenyl or a high-molecular group; and
R⁴ is selected from the group consisting of phenyl, ferrocenyl and alkyl.

7. The method of claim 1, wherein for the pyrophosphorous acid with impurities, the impurities comprise carboxylic acid, acyl chloride, phosphorous acid, water, hydrogen chloride, or a combination thereof; and
the impurities account for 20% or less of a total weight of the pyrophosphorous acid.

8. The method of claim 1, wherein the reduction reaction is carried out under a nitrogen atmosphere or an air atmosphere.

9. The method of claim 1, further comprising:
adding an organic solvent;
wherein the organic solvent is selected from the group consisting of an aromatic solvent, alkane, haloalkane, and a combination thereof.

10. The method of claim 1, wherein the molar ratio of the catalyst to the phosphine oxide group in the phosphine oxide compound or the phosphine sulfide group in the phosphine sulfide compound is 0.0025-0.025:1.
